# EUROPÄISCHE PATENTSCHRIFT

(11) **EP 0 934 215 B1**
(45) Veröffentlichungstag und Bekanntmachung des Hinweises auf die Patenterteilung: **03.01.2001**
(21) Anmeldenummer: 97909059.4
(22) Anmeldetag: 24.10.1997
(51) Int. Cl.: B65G 1/137, B65G 59/06

(54) **SPEICHERREGAL**
STORAGE SHELVING
RAYONNAGE DE STOCKAGE

(30) Priorität: 25.10.1996 AT 187596
(43) Veröffentlichungstag der Anmeldung: 11.08.1999
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Weinzinger, Arnulf, Dipl.-Ing.
(86) Internationale Anmeldenummer: AT9700228
(87) Internationale Veröffentlichungsnummer: WO9818696

(56) Entgegenhaltungen:
- EP-A- 0 611 265
- EP-A- 0 683 116
- US-A- 3 624 792
- US-A- 5 065 897

## Beschreibung

Die Erfindung betrifft ein Speicherregal für Stückgüter gemäß dem einleitenden Teil von Anspruch 1. Ein solches Speicherregal ist aus der US 5 065 897 A bekannt. Die Stückgüter können dabei in vertikalen Stapeln, aber auch in horizontalen Stapeln in den Speicherfächern enthalten sein.

Weiters bezieht sich die Erfindung auch auf eine Anordnung mit mehreren solchen Speicherregalen.

Das aus der vorgenannten US 5 065 897 A bekannte Speicherregal dient zur Ausgabe unterschiedlicher Artikel, die auf zwei Niveaus in vertikalen Fächern gespeichert sind. Die zum Ausschieben der Artikel vorgesehenen Schieberteile sind durch Auswurfplatten gebildet, die eine mittige Auswurföffnung haben und mit, den einzelnen Fächern zugeordneten, ausschiebbaren Mitnehmern versehen sind. Diese Auswurfplatten-Schieberteile sind dabei in den beiden Niveaus unabhängig voneinander angebracht.

Weiters ist in der EP 683 116 A eine Regaleinrichtung geoffenbart, bei der eine vertikale Stange an der Regalkonstruktion vertikal verschiebbar gelagert ist. Diese Stange trägt horizontale Konsolen mit Langlöchern, in denen Stifte aufgenommen sind, die an den einzelnen Fachniveaus zugeordneten horizontalen Querträgern angebracht sind, welche dadurch je entlang Führungen schräg auf und ab bewegbar sind. Diese Querträger nehmen bei entsprechender Erregung von Elektromagneten Auswerfer mit, um so aus den einzelnen Kanälen das jeweils vorderste Produkt nach oben auszuwerfen.

Aus der US 4 267 942 A ist ein Medikamentenschrank bekannt, bei dem Speicherfächer für Medikamentenpackungen in horizontalen und vertikalen Reihen vorgesehen sind, wobei zum Ausschieben der Medikamentenpackungen für jedes Speicherfach ein Stößel vorgesehen ist, der hinter dem jeweiligen Speicherfach in einer Buchse gelagert ist und die jeweils unterste Medikamentenpackung des im Speicherfach vorhandenen vertikalen Packungen-Stapels ausschieben kann. Um Stößel-Betätigungen zu erfassen, sind hinter den Speicherfächern gefederte Schwenkklappen im Weg der Stößel vorgesehen. Die Stößel-Betätigung ist dabei deshalb vorgesehen, damit ein Zugang zu den Medikamentenpackungen im Schrank im übrigen verwehrt werden kann. Diese bekannte Konstruktion ist somit relativ kompliziert und kaum für Kommissionieranlagen geeignet.

Andererseits sind bereits vielfach Kommissionieranlagen bekannt geworden, bei denen Stückgüter rechnergesteuert aus Speicherfächern (oft auch Kanäle, Magazine oder Vorratsbehälter genannt) von Speicherregalen abgegeben werden, wozu die verschiedensten Auswerfer, jeweils einer für ein Speicherfach, vorgesehen wurden, was einen erheblichen Aufwand darstellt, vgl. beispielsweise die EP 26 754 A, EP 165 918 A, EP 515 350 B, aber auch EP 560 206 A oder EP 592 729; bei diesen Anlagen werden die Stückgüter in der Regel je nach Kommissionierauftrag automatisch auf ein Förderband, gegebenenfalls unter vorhergehender Zwischenspeicherung (s. z.B. AT 391 671 B), gebracht und von diesem Förderband zu einer Übergabestation, zu einem weiteren Förderband (s. z.B. EP 183 074), oder aber zu einem Verpackungsbereich transportiert.

Beim Speicherregal gemäß der US 5 439 345 A sind zwei steile, schräg aneinanderstoßende Speicherregale in einer A-Anordnung vorgesehen, in deren Speicherfächern die Stückgüter übereinandergestapelt sind. Zum Auswerfen der jeweils untersten Stückgüter sind mit einem gemeinsamen Antrieb versehene Querträger vorgesehen, an welchen sich für jeden Stückgut-Stapel ein Mitnehmer in Form eines quaderförmigen Ausstoßers über einen Elektromagneten anheften kann, wenn der Elektromagnet aktiviert wird. Der gemeinsame Antrieb der Querträger erfolgt durch eine zwischen den Speicherregalen angeordnete antreibbare Scheibe, die beidseitig exzentrisch angeordnete Nuten aufweist, in welchen jeweils ein Ende eines zweiarmigen Schwinghebels geführt ist, dessen anderes Ende mit dem Querträger verbunden ist. Es ist auch vorgesehen, daß jeweils zwei übereinander angeordnete Reihen von nebeneinanderliegenden Speicherfächern in den Speicherregalen angebracht sind, wobei dazu eine weitere Scheibe für den Antrieb erforderlich ist. Die bekannte Konstruktion ist relativ aufwendig, kompliziert, und somit auch störanfällig, insbesondere wenn die Zahl der Fachreihen übereinander erhöht würde.

Aufgabe der Erfindung ist die Schaffung eines Speicherregals der eingangs genannten Art, bei dem der Aufwand für die Abgabevorrichtung samt deren Antrieb möglichst gering ist und ein rationeller Abgabevorgang durch parallele Ausschiebevorgänge, und zwar auch unter Rechnersteuerung, ermöglicht wird, und das sich gegebenenfalls für die verschiedensten Kommissionieranlagen gemäß Stand der Technik (z.B. wie oben angegeben) einsetzen läßt.

Diese Aufgabe wird erfindungsgemäß durch die in Anspruch 1 angegebenen Merkmale gelöst. Vorteilhafte Ausführungsformen und Weiterbildungen sind Gegenstand der Unteransprüche.

Anstelle einer individuellen Antriebseinrichtung pro Reihe von nebeneinander angeordneten Speicherfächern liegt somit beim vorliegenden Speicherregal in vorteilhafter Weise eine baulich einfache Anordnung vor, bei der pro Speicherregal insgesamt nur eine Antriebseinrichtung erforderlich ist. Um dann in beliebigen Reihen aus bloß einzelnen ausgewählten Speicherfächern Speichergüter auszuschieben, werden die entsprechenden Mitnehmer an den Querträgern des Rahmens, vorzugsweise rechnergesteuert, aktiviert; wo die Mitnehmer nicht aktiviert werden, werden auch keine Stückgüter ausgeschoben. Ein weiterer Vorteil besteht darin, daß die Mitnehmer auch an den Querträgern von diesen lösbar bzw. verstellbar, insbesondere längs der Querträger verstellbar, angebracht werden können, um so eine Anpassung an die Speicherfächer - wenn diese durch verstellbare Trennwände definiert werden - zu ermöglichen. Durch den gleichzeitigen Ablauf der Ausschiebevorgänge mit Hilfe der über den Rahmen gleichzeitig bewegten Querträger wird Zeit gespart, und es kann eine große Anzahl Stückgüter gleichzeitig ausgeworfen werden; auch sind die Ausschiebevorgänge in kurzer Folge wiederholbar, so daß Kommissionieraufträge in kurzer Zeit erledigt werden können.

Bei einer bevorzugten einfachen Ausbildung des Rahmens sind die Querträger zur Bildung des Rahmens über Seitenleisten miteinander verbunden.

Gemäß einer vorteilhaften Ausführungsform, mit leichtgängigen Querträgern, ist vorgesehen, daß die Querträger über an ihren Enden angebrachte Rollen in Führungsschienen an einem Gestellrahmen des Speicherregals verschiebbar gelagert sind.

Die Querträger können auch gemeinsam, über den Rahmen, durch zumindest einen (pneumatischen oder hydraulischen) Arbeitszylinder antreibbar sein.

Weiters ist es für eine mechanisch einfache, platzsparende Konstruktion der Antriebseinrichtung günstig, wenn der Rahmen, vorzugsweise im Bereich des obersten und untersten Querträgers, mit Kettentrieben verbunden ist, deren Kettenräder über Wellen in einem Gestellrahmen des Speicherregales gelagert sind, wobei die Wellen synchron - vorzugsweise von einem einzigen Motor - antreibbar sind. Dabei kann der Rahmen in an sich bekannter Weise über Mitnehmerzapfen oder dergl., die in die Kette(n) eingreifen, mit dem Kettentrieb zur Vor- und Rückbewegung gekuppelt sein.

Bei den vorstehend erläuterten Ausführungsformen bewegen sich die Querträger, wenn sie direkt die Mitnehmer tragen, zwischen den übereinander angeordneten Speicherfächer-Reihen vor und zurück, und da sie über den Rahmen zu einer Einheit verbunden sind, können - damit sich die vertikalen Seitenleisten oder Holme am Regal entlang bewegen können - die Böden der Speicherfächer an der Regal-Vorderseite (d.h. an der Abgabeseite) fixiert sein und nach hinten frei auskragen. Dies ist jedenfalls dann problemlos, wenn die gespeicherten Stückgüter nicht allzu schwer sind; gegebenenfalls können die Böden auch zur Versteifung mit Rippen, Stegen etc. (vorzugsweise an ihrer Unterseite) versehen sein. Andererseits wird bei dieser Ausbildung eine geringe Regaltiefe ermöglicht, da sich praktisch die gesamte Ausschiebe-Einheit (Rahmen, Querträger) innerhalb der für die Speicherfächer benötigten Regaltiefe vor und zurück bewegen kann.

Wenn andererseits hinter den Speicherfächern, auf der Rückseite des Regals, genügend Platz ist, kann es - um auch eine Abstützung der Fachböden an den Regal-Seiten zu ermöglichen - von besonderem Vorteil sein, wenn die Querträger an den Enden von Armen befestigt sind, die vom Rahmen in dessen Bewegungsrichtung abstehen, wobei vorzugsweise zumindest einige dieser Arme über Rollen in seitlichen Führungsschienen gelagert sind, welche in einem Gestellrahmen des Speicherregales befestigt sind.

In diesem Zusammenhang ist es für den Antrieb, um ein Verkanten zu vermeiden, auch günstig, wenn an zumindest zwei Armen Zahnleisten vorgesehen sind, die mit Zahnrädern kämmen, die auf einer gemeinsamen Welle befestigt sind, die im Gestellrahmen gelagert und mit einer Antriebseinrichtung - vorzugsweise einem gemeinsamen Motor - verbunden ist.

Gemäß einer weiteren vorteilhaften Ausführungsform des erfindungsgemäßen Speicherregales ist vorgesehen, daß die Mitnehmer über Arme mit den Querträgern verbunden sind, und am Rahmen zusätzliche Arme angebracht sind, die an ihren Enden Rollen tragen, welche in Führungsschienen an einem Gestellrahmen des Speicherregales gelagert sind. Bei dieser Ausbildung ragen die Arme einzeln von hinten in die Speicherfächer hinein, wenn der Rahmen nach vorne bewegt wird.

Hierbei ist es auch günstig, wenn der Rahmen, z.B. in ungefähr mittlerer Höhe, mit am Gestellrahmen befestigten Arbeitszylindern verbunden ist. Bevorzugt werden Druckluftzylinder eingesetzt.

Andererseits ist es für eine leichtgängige Konstruktion auch von Vorteil, wenn die Querträger des Rahmens Wagen mit Rädern definieren, die in seitlichen Führungen laufen.

Dabei hat es sich als günstig erwiesen, wenn zumindest der oberste und unterste Wagen, die je einer Reihe von nebeneinander liegenden Speicherfächern zugeordnet sind, über eine Kurbelstange mit einer Kurbelscheibe gekuppelt ist, deren Welle in einem Gestellrahmen des Speicherregales gelagert ist.

Hierbei ist es weiters für den synchronen Antrieb vorteilhaft, wenn die Kurbelscheiben aller Wagen untereinander durch Zahnriemen gekoppelt und über eine Antriebseinrichtung angetrieben sind.

Auch hat es sich als vorteilhaft erwiesen, wenn die Führungen und die Speicherfächer in Ausschubrichtung schräg nach unten geneigt angeordnet sind. Hierdurch wird das Ausschieben der Stückgüter in vorteilhafter Weise erleichtert.

Von besonderem Vorteil ist es auch, wenn an zumindest einem Querträger, vorzugsweise an jedem Querträger, im Bereich zumindest eines Mitnehmers ein den Ausschiebevorgang am zugeordneten Speicherfach überwachender Sensor angeordnet ist, der vorzugsweise auch feststellt, ob das Speicherfach Stückgüter enthält oder leer ist. Diese Sensoren überwachen somit nicht nur den Ausschiebevorgang, sondern können sogar eine Doppelfunktion erfüllen, indem sie auch den Füllstand der Speicherfächer überwachen, was dadurch begünstigt wird, daß sie beweglich sind, da sie auf den Querträgern angeordnet sind. Die Sensoren können z.B. mechanische Fühler, z.B. Mikroschalter, sein, vorzugsweise werden jedoch optische Sensoren eingesetzt, die z.B. auf Reflexionslichtmessung beruhen oder durch Lichtschranken gebildet sein können.

Eine weitere baulich vorteilhafte Ausbildung besteht darin, daß die Mitnehmer im aktivierten Zustand von ihren unterhalb der Böden der Speicherfächer bewegbaren Querträger durch Schlitze in den Böden nach oben ragen, im nicht-aktivierten Zustand jedoch unterhalb der Böden vorliegen. Die Mitnehmer können dabei über gesonderte Antriebe, z.B. über Zahnstangentriebe, ausgeschoben werden. Bei einer bevorzugten Ausbildung der Mitnehmer ist jedoch vorgesehen, daß die Mitnehmer durch ausschiebbare Magnetkerne von an den Querträgern angeordneten Elektromagneten gebildet bzw. angetrieben sind.

Die vorliegenden Speicherregale können wie frühere Speicherregale in rechnergesteuerten Kommissionieranlagen eingesetzt werden, wobei die vorliegenden Speicherregale beispielsweise für sog. "langsamdrehende" Stückgüter besonders vorteilhaft sein können, da sich eine vereinfachte Abgabevorrichtung und Antriebsvorrichtung hierfür besonders günstig erweist. Die Erfindung sieht in diesem Zusammenhang auch eine besonders vorteilhafte Speicherregal-Anordnung mit vereinfachter Antriebsvorrichtung vor, die dadurch gekennzeichnet ist, daß (wie an sich bekannt) beiderseits eines Förderbandes einander gegenüberliegend Speicherregale vorgesehen sind, und daß die Wagen von einander gegenüberliegenden Speicherregalen über deren zugeordnete Kurbelstangen durch eine gemeinsame, zwischen den Speicherregalen angeordnete Kurbelscheibe angetrieben sind.

Die Erfindung wird nachfolgend anhand von in der Zeichnung dargestellten Ausführungsbeispielen, auf die sie jedoch nicht beschränkt sein soll, noch weiter erläutert. Es zeigen:
Fig.1 eine schematische Darstellung von neben einem Förderband aufgestellten Kommissionier-Speicherregalen (nachstehend kurz Speicherregale genannt) in Draufsicht;
Fig.2 eines der Speicherregale nach Fig.1 in Rückansicht, wobei der allgemeine Speicherregal-Aufbau veranschaulicht und der Rahmen nicht näher ersichtlich ist;
Fig.3 einen im Speicherregal nach Fig.2 verwendeten Boden eines Speicherfaches in Draufsicht;
Fig.4 ein Detail des Speicherregales nach Fig.2 im Schnitt nach der Linie IV-IV in Fig.2;
die Fig.5 bis 10 drei weitere Ausführungsformen von Speicherregalen, jeweils in schematischer Rückansicht und Seitenansicht;
Fig.11 eine besonders bevorzugte Ausführungsform eines Speicherregales in schematischer Seitenansicht;
Fig.12 eine bevorzugte Anordnung von beidseitig eines Förderbandes angeordneten Speicherregalen in schematischer Seitenansicht; und
Fig.13 eine Draufsicht auf die Anordnung von Speicherregalen gemäß Fig.10.

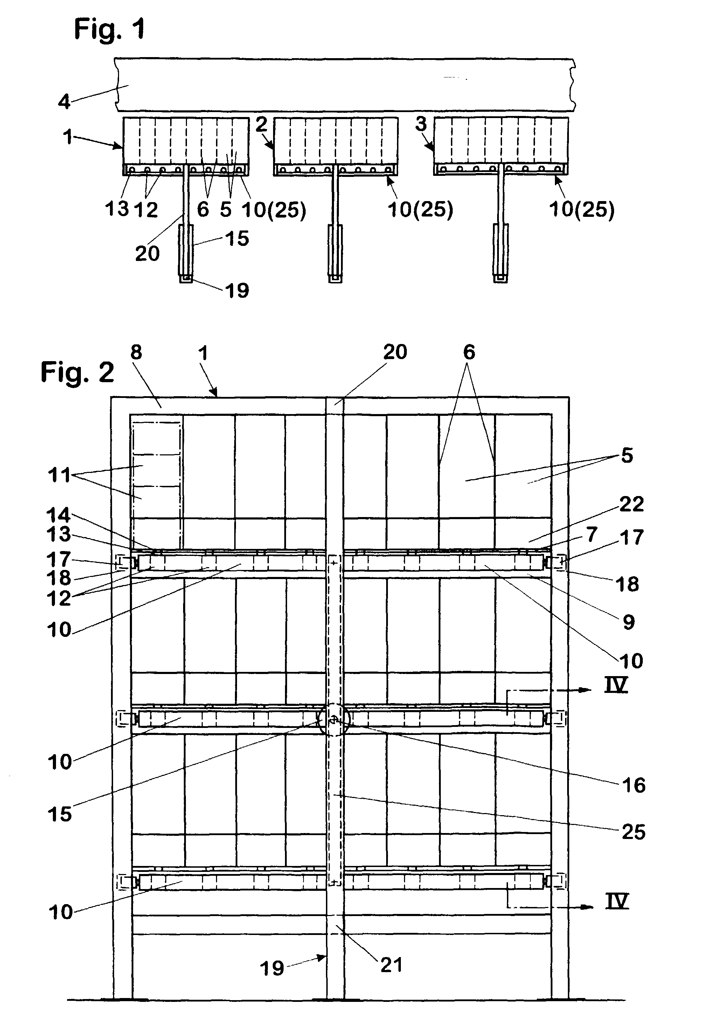

Gemäß Fig.1 sind Speicherregale 1, 2 und 3 neben einem Förderband 4 aufgestellt, um eine Kommissionieranlage für Stückgüter verschiedener Arten, beispielsweise für pharmazeutische Produkte oder für Tabakwaren, zu bilden.

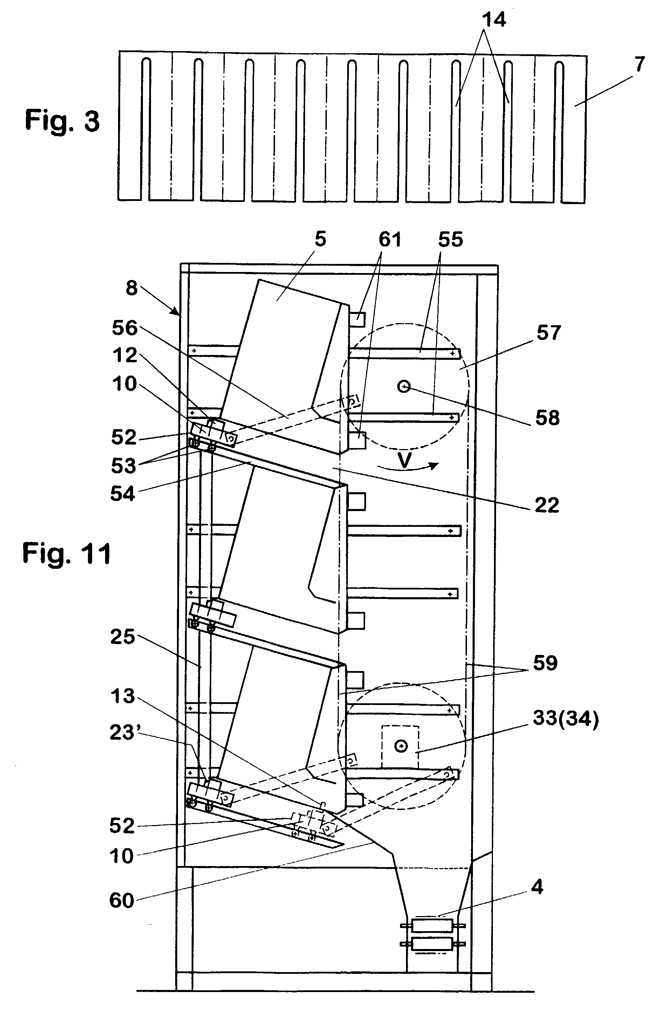

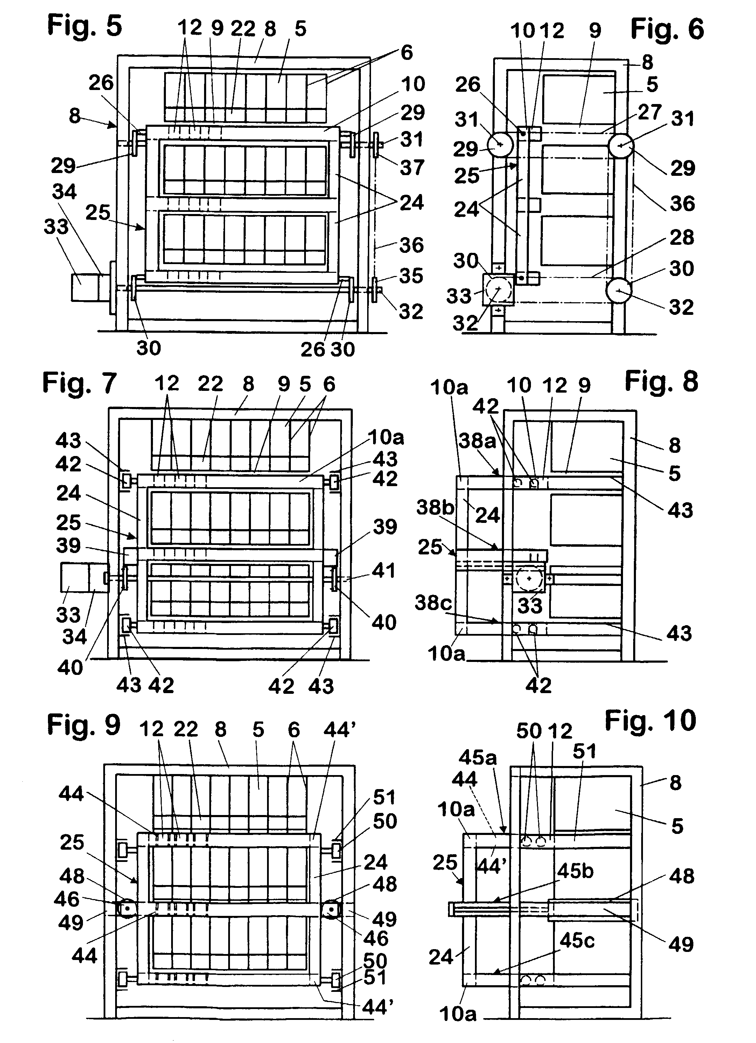

Jedes Speicherregal, z.B. 1, weist neben- und übereinander angeordnete Speicherfächer 5 auf, die seitlich durch Trennwände 6 voneinander getrennt sind und an ihrer Unterseite einen gemeinsamen, in Fig.3 dargestellten plattenförmigen Boden 7 besitzen. Die auf diese Weise gebildeten Speicherfächer 5 sind in einem Gestellrahmen 8 angeordnet. Die übereinanderliegenden Reihen von Speicherfächern 5 sind jeweils mit Abstand voneinander angeordnet, d.h. die Trennwände 6 enden mit ihrer Oberseite im Abstand unterhalb der Böden 7, so daß ein sich über die Gesamtbreite der jeweiligen horizontalen Reihe der Speicherfächer 5 erstreckender Zwischenraum 9 zwischen jeder Bodenplatte 7 und dem oberen Rand der Trennwände 6 gebildet wird, welcher zum Einschieben von eine Abgabevorrichtung definierenden Querträgern 10 eines Rahmens 25 (s. Fig.5 bis 12) dient, um Stückgüter 11, welche in den Speicherfächern 5 in der jeweils untersten Position von vertikalen Stapeln vorhanden sind, aus den Speicherfächern 5 in Richtung Vorder- oder Abgabeseite, zum Förderband 4 hin, auszuschieben (s. Fig.1). Die Querträger 10 tragen beispielsweise den einzelnen Speicherfächern 5 zugeordnete, verschiebbare Elektromagneten 12, deren stabförmige Kerne nach oben ragen, um Mitnehmer 13 für die untersten Stückgüter 11 zu bilden. Die Querträger 10 des Rahmens 25 sind in Richtung zur Vorderseite hin und von der Vorderseite zurück bewegbar. Im aktivierten Zustand der Elektromagnete 12 werden deren Kerne als Mitnehmer 13 nach oben bewegt, und sie können durch Längsschlitze 14 in den Böden 7 (s. Fig.3) hindurch in das jeweilige Speicherfach 5 hineinragend am jeweiligen untersten Stückgut 11 hinten anliegen und dieses in Richtung Abgabeseite bzw. Förderband 4 vorschieben, wenn der Rahmen 25 in Vorwärtsbewegung gesetzt wird. Zu diesem Zwecke ist bei der Ausführungsform nach Fig.1 ein Antrieb in Form von pneumatischen oder hydraulischen, doppeltwirkenden Arbeitszylindern 15 vorgesehen, wobei jedem Rahmen 25 ein Zylinder 15 zugeordnet ist, wie auch aus Fig.2 schematisch ersichtlich ist. Im einzelnen kann der jeweilige Rahmen 25 mit der zugehörigen Kolbenstange 16 verschraubt sein. Die seitlichen Enden der Querträger 10 sind über jeweils eine Rolle 17 in C-förmigen Führungsschienen 18 verschiebbar gelagert, die im Gestellrahmen 8 montiert sind.

Aus Fig.1 und 2 ist weiters ersichtlich, daß die freien Enden der Zylinder 15 an einem Steher 19 befestigt sind, der über eine obere und untere horizontale Querstrebe 20, 21 mit dem Gestellrahmen 8 verbunden ist.

Die Ansteuerung der Zylinder 15 und der Elektromagnete 12 erfolgt in an sich herkömmlicher Weise rechnergesteuert (nicht dargestellt).

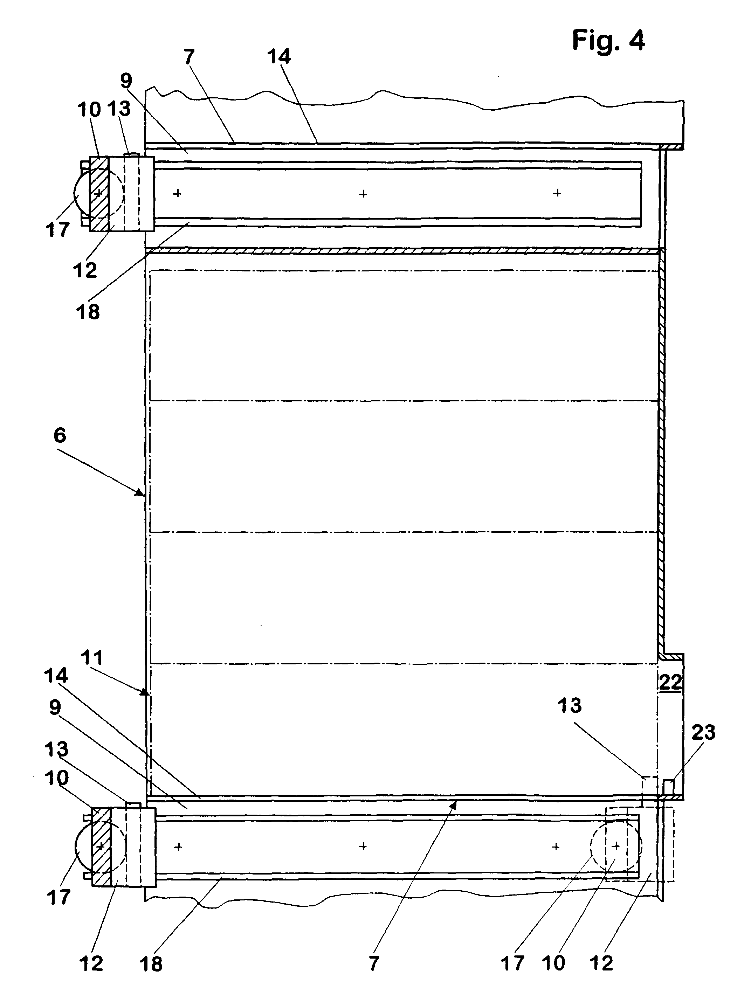

Um nun aus einem oder mehreren der Speicherfächer 5 ein Stückgut über eine Ausgabeöffnung 22 (s. Fig.4) an der Regal-Vorderseite auszuschieben, werden die entsprechenden Elektromagnete 12 und die Zylinder 15 der entsprechenden Speicherregale 1, 2, 3 angesteuert bzw. aktiviert. Über einen bei der Ausgabeöffnung angebrachten Sensor 23, z.B. eine Lichtschranke oder einen Mikroschalter, kann das vollständige Ausschieben des jeweiligen Stückgutes 11 erfaßt werden, worauf der bzw. die Elektromagnete 12 entregt und anschließend der bzw. die Zylinder 15 auf der anderen Seite mit Druck beaufschlagt werden, so daß der Rahmen 25 und damit die Querträger 10 mit den Elektromagneten 12 von der in Fig.4 mit strichlierter Linie rechts dargestellten vorderen Endstellung in die links dargestellte hinteren Ausgangsstellung zurückkehren.

Selbstverständlich kann anstelle eines Druckzylinder-Antriebs auch ein anderer Antrieb für die Rahmen 25 vorgesehen werden, wie etwa ein in den Gestellrahmen 8 integrierbarer Ketten- oder Seiltrieb oder Kurbelscheibentrieb, vgl. auch die nachfolgende Beschreibung weiterer Ausführungsbeispiele. Wesentlich ist, daß über dem Rahmen 25 bei jedem Speicherregal sämtliche Querträger 10 und damit sämtliche Elektromagnete 12 gleichzeitig in Richtung zum Förderband 4 bewegbar sind, wobei grundsätzlich nur eine Antriebseinrichtung erforderlich ist.

Bei der Ausführungsform nach Fig.5 und 6 sind die Querträger 10 mittels Seitenleisten oder Holmen 24 zu einem einheitlichen Rahmen 25 für die Elektromagnete 12 vereinigt. Von den seitlichen Enden der obersten und untersten Querträger 10 ragen Mitnehmerzapfen 26 in Verlängerung dieser Querträger 10 vor, die mit einem Glied einer oberen Kette 27 bzw. unteren Kette 28 verbunden sind; diesen Ketten 27, 28 sind paarweise Kettenräder 29, 30 zugeordnet, die über obere und untere Wellen 31, 32 im Gestellrahmen 8 gelagert sind. Eine der unteren Wellen 32 ist mit einem am Gestellrahmen 8 befestigten Antriebsmotor 33 mit Getriebe 34 verbunden, während die andere untere Welle 32 ein zusätzliches Kettenrad 35 aufweist, das über eine Kette 36 mit einem zusätzlichen Kettenrad 37 auf einer der oberen Welle 31 antriebsmäßig verbunden ist, so daß beim Ansteuern bzw. Einschalten des Antriebsmotors 33 eine gleichzeitige Drehung der Kettenräder 29, 30, 35 und 37 und damit ein gleichmäßiger Antrieb des Rahmens 25 samt den Elektromagneten 12 erfolgt. Durch Änderung der Drehrichtung des Antriebsmotors 33 wird dementsprechend auch die Bewegungsrichtung des Rahmens 25 umgekehrt.

Die Speicherfächer 5 sind bei der Ausführungsform nach Fig.5 und 6 nach Art einer freitragenden Konsole an der Vorderwand des Gestellrahmens 8 befestigt, so daß der Bewegung des Rahmens 25 bzw. von dessen Querträgern 10 und Seitenleisten 24 in den Zwischenräumen 9 sowie seitlich der endseitigen Speicherfächer 5 kein Hindernis im Wege steht. Die Rückseiten der Speicherfächer 5 können über die gesamte Fachhöhe offen ausgebildet sein, um das Einfüllen der Stückgüter 11 zu erleichtern. Bei horizontal ausgerichteten Speicherfächern 5 können an den Rückseiten der Speicherfächer 5 auch Rückhalteteile, z.B. Klappen oder abnehmbare Schiebewände, für die Stückgüter 11 vorgesehen sein, um ein Herausfallen der Stückgüter 11 zu verhindern.

Beim in Fig.7 und 8 gezeigten Ausführungsbeispiel sind die Querträger 10 mit den Elektromagneten 12 an den Enden von jeweils zwei nach vorne abstehenden Armen 38a, 38b, 38c eines Rahmens 25 befestigt, der, ähnlich wie beim Ausführungsbeispiel nach Fig.5 und 6, aus Querträgern 10a und vertikalen Seitenleisten 24 gebildet ist. An den Seiten der mittleren Arme 38b sind Zahnleisten 39 befestigt, die jeweils mit einem Zahnrad 40 kämmen, wobei die Zahnräder 40 auf einer gemeinsamen Welle 41 befestigt sind, die im Gestellrahmen 8 gelagert ist und von einem am Gestellrahmen 8 befestigten Antriebsmotor 33 mit Getriebe 34 angetrieben wird. An den Seiten der obersten und untersten Arme 38a, 38c sind Rollen 42 angebracht, die in C-förmigen, am Gestellrahmen 8 montierten Führungsschienen 43 verschiebbar gelagert sind. Durch Ansteuern bzw. Einschalten des Antriebsmotors 33 werden beide Zahnleisten 39 - und damit die Rahmen/Querträger-Einheit - gleichzeitig in Bewegung gesetzt; die Umkehr der Bewegungsrichtung erfolgt wiederum durch Ändern der Drehrichtung des Antriebsmotors 33.

Die Speicherfächer 5, d.h. deren Böden 7 und Trennwände 6, sind wie bei der Ausführungsform nach Fig.5 und 6 an der Vorderseite des Gestellrahmens 8 befestigt, und die Speicherfächer 5 können an ihrer Ober- und Rückseite offen ausgebildet sein.

Bei der Ausführungsform gemäß Fig.9 und 10 sind die Elektromagnete 12 jeweils einzeln an von einem durch Querträger 10a und Seitenleisten 24 gebildeten Rahmen 25 fingerartig abstehenden Armen 44 befestigt, die eine obere, eine mittlere und eine untere Armreihe 45a, 45b und 45c bilden. In der Höhe der mittleren Armreihe 45b weist der Rahmen 25 beidseitig winkelförmige Fortsätze 46 auf, die jeweils mit einer Kolbenstange 47 eines pneumatischen oder hydraulischen Zylinders 48 verbunden sind, wobei die Zylinder 48 ihrerseits an einem Querteil 49 des Gestellrahmens 8 befestigt sind. An den vier Ecken des Rahmens 25 sind zusätzliche Arme 44' angebracht, die jeweils an ihrem Ende Rollen 50 tragen, welche in C-förmigen Führungsschienen 51 am Gestellrahmen 8 verschiebbar gelagert sind. Durch Ansteuern bzw. Aktivieren der beiden Zylinder 48 wird der Rahmen 25 direkt in Bewegung gesetzt.

Die Speicherfächer 5 können bei dieser Ausführungsform bis auf eine Öffnung zum Einschieben der fingerartigen Arme 44 allseitig geschlossen ausgebildet sein, d.h. es braucht kein frei auskragender Boden und auch kein Zwischenraum 9 vorhanden zu sein. Gegebenenfalls können die seitlichen Trennwände auch der Höhe nach über die übereinanderliegenden Speicherfächer 5 verlaufend und die Rückseiten der Speicherfächer 5 offen ausgebildet sein, wobei jedoch die Gesamthöhe der übereinanderliegenden Stückgüter 11 kleiner als der Abstand zwischen den Unterkanten der Querträger 10 und den Böden 7 sein muß.

Bei der in Fig.ll gezeigten derzeit besonders bevorzugten Ausführungsform eines Speicherregales definieren die Querträger 10 des Rahmens 25 Wagen 52, wobei die beiden Enden der Querträger 10, mit den Elektromagneten 12 pro Speicherfach 5, jeweils mit einem kleinen Schlitten mit Rädern 53 verbunden sind, der in einer in Ausschubrichtung leicht schräg nach unten geneigten Führungsschiene 54 verschiebbar geführt ist, welche unterhalb der ebenfalls schräg geneigten und in Reihe nebeneinander angeordneten Speicherfächer 5 angebracht ist. Die Speicherfächer 5 sind beispielsweise an seitlichen Leisten 55 des Gestellrahmens 8 befestigt. Die Wagen 52 jeder Reihe von Speicherfächern 5 sind über eine angelenkte seitliche Kurbelstange 56 mit einer Kurbelscheibe 57 gekuppelt, wobei die Wellen 58 der Kurbelscheiben 57 im Gestellrahmen 8 gelagert sind und die Kurbelscheiben 57 untereinander, z.B. durch Zahnriemen 59, gekuppelt sein können, so daß über einen Antriebsmotor 33 mit Getriebe 34, der z.B. mit der untersten Welle 58 gekuppelt ist, die Querträger 10 bzw. Wagen 52 alle gleichzeitig in Richtung zur Ausgabeöffnung 22 in Bewegung gesetzt werden können, wenn sich die Kurbelscheiben 57 in Richtung des Pfeiles V drehen. Beim untersten Speicherfach 5 ist der Wagen 52 bzw. Querträger 10 mit einem ausgefahrenen Mitnehmer 13, mit gestrichelten Linien dargestellt, in seiner Endstellung veranschaulicht.

Die Stückgüter 11 gelangen, wenn sie die Regal-Vorderseite erreichen, über eine Rutsche 60 auf ein Förderband 4.

Durch Umkehren der Drehrichtung des Antriebsmotors 33 können die Wagen 52 wieder in ihre Ausgangsstellung zurück gelangen. Gegebenenfalls kann jedoch - wie dies bevorzugt wird - von einer solchen Drehrichtungsumkehr abgesehen werden, und es wird die Rückführung der Querträger 10 einfach durch Weiterdrehen der Kurbelscheiben 57 bewerkstelligt; demgemäß entspricht eine erste Verdrehung der Kurbelscheiben 57 um 180° einem Vorwärtshub der Querträger 10, und bei Verdrehen um weitere 180° werden die Querträger 10 wieder zurückbewegt.

Hinter jedem der Elektromagneten 12 ist ein Sensor 23' am Wagen 52 bzw. Querträger angeordnet, der z.B. als Lichtschranke oder Mikroschalter ausgebildet sein kann, und der einerseits den Ausschiebevorgang überwachen und andererseits feststellen kann, ob das betreffende Speicherfach 5 noch mit Stückgütern 11 gefüllt oder bereits leer ist.

Die Querträger 10 sind, ähnlich wie bei der Ausführungsform nach Fig.5 und 6, in einem Rahmen 25 miteinander verbunden. Die Speicherfächer 5 sind aus Stabilitätsgründen weiters mit ihrer Vorderseite an quer zur Ausschubrichtung verlaufenden Profilträgern 61 befestigt; für die mittig angeordneten Wagen 52 entfallen die Kurbelscheiben 57 samt Kurbelstangen 56.

Selbstverständlich sind in der Regel mehr als - wie dargestellt - drei Reihen von Speicherfächern 5 übereinander vorgesehen. Auch ist es denkbar, die Stückgüter 11 in den Speicherfächern 5 hintereinander zu stapeln, und durch entsprechendes Ansteuern der Mitnehmer 13 jeweils ein, zwei etc. Stückgüter 11 hintereinander auszuschieben.

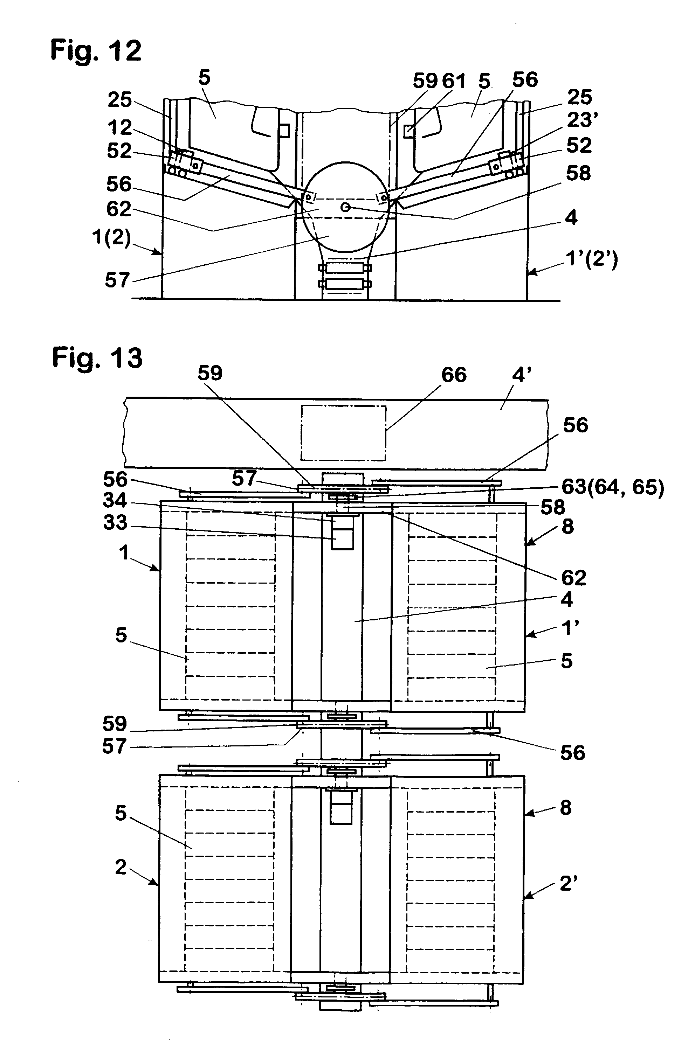

Die in Fig.12 und 13 dargestellte Anordnung von Speicherregalen enthält beiderseits des Förderbandes 4 aufgestellte Speicherregale 1, 1' und 2, 2', um eine effiziente Ausnutzung des zur Verfügung stehenden Raumes zu ermöglichen, wobei auch z.B. auf jeder Seite drei oder vier Speicherregale 1, 2 bzw. 1', 2' nebeneinander angeordnet sein können. Diese Speicherregale 1, 2; 1', 2' entsprechen dabei allgemein der Ausführungsform gemäß Fig.11, und es sind die zur Ausführungsform gemäß Fig.11 gleichen Bauteile mit gleichen Bezugszeichen versehen. Die Wagen 52 von jeweils gegenüberliegenden Speicherregalen 1, 1'; 2, 2' werden hierbei jeweils über deren zugeordneten Kurbelstangen 56 von einer gemeinsamen, mittig zwischen den Speicherregalen 1, 1'; 2, 2' angeordneten Kurbelscheibe 57 angetrieben. Die Kurbelscheiben 57 sind beispielsweise über Wellen 58 in einem, die Gestellrahmen 8 der Speicherregale 1, 1' und 2, 2' verbindenden Steg 62 gelagert. Wie bei der Ausführungsform nach Fig.11 sind die übereinander angeordneten Kurbelscheiben 57 untereinander durch Zahnriemen 59 gekuppelt. Die Welle 58 der obersten Kurbelscheibe 57 weist zusätzlich ein Zahnrad 63 auf, welches über einen Zahnriemen 64 mit einem Zahnrad 65 eines Antriebsmotors 33 mit Getriebe 34 gekuppelt ist. Bei jedem Ausschiebevorgang werden die Kurbelscheiben 57 jeweils um 360° gedreht, so daß keine Umkehrung der Drehrichtung des Antriebsmotors 33 erforderlich ist.

Die ausgegebenen Stückgüter gelangen dann über das Förderband 4, das beispielsweise die Funktion eines Sammelbandes - gegebenenfalls aber auch jene eines Zentralbandes hat - zu einem nach den Speicherregalen 1, 1' angeordneten Förderband 4', gegebenenfalls in einen Behälter 66 auf dem Förderband 4', um anschließend zu einer Sammelstelle (nicht dargestellt) transportiert zu werden. Im Falle einer Anordnung mit bloß drei oder vier Speicherregalen 1, 2...; 1', 2'... pro Seite (so daß eine Länge von insgesamt z.B. 5 bis 6 m erhalten wird) und einer Speicherung von "langsamdrehenden" Stückgütern werden beispielsweise jeweils nur zu einem Kommissionierauftrag gehörende Stückgüter auf dem Förderband 4 gesammelt, das während dieser Zeit gestoppt sein kann (Sammelband-Funktion). Selbstverständlich ist es aber auch denkbar, das Förderband 4 als Zentralband einzusetzen, auf dem die Stückgüter gruppenweise, entsprechend den Kommissionieraufträgen, angehäuft und transportiert werden.

Anstelle der Förderbänder 4 bzw. 4' können naturgemäß auch andere Fördertechniken, wie Rollenbahnen, verwendet werden.

## Patentansprüche

1. Speicherregal (1, 2, 3) für Stückgüter, mit neben- und übereinander angeordneten Speicherfächern (5), und mit einer steuerbaren Abgabevorrichtung zum Ausschieben der Stückgüter aus den Speicherfächern (5), wobei die Abgabevorrichtung den Reihen von nebeneinander angeordneten Speicherfächern (5) zugeordnete, parallel zu deren Fachböden bewegbare Schieberteile aufweist, die mit den einzelnen Speicherfächern (5) der entsprechenden Reihe zugeordneten, gesondert aktivierbaren Mitnehmern (13) zusammenwirken, um im aktivierten Zustand der Mitnehmer (13) bei einem Vorbewegen der Schieberteile die Stückgüter aus den jeweiligen Speicherfächern (5) auszuschieben, wobei die Mitnehmer (13) im aktivierten Zustand von ihren unterhalb der Böden (7) der Speicherfächer (5) bewegbaren Schieberteilen durch Schlitze (14) in den Böden (7) nach oben ragen, im nicht-aktivierten Zustand jedoch unterhalb der Böden (7) vorliegen, dadurch gekennzeichnet, dass die durch balkenartige Querträger (10) gebildeten, übereinander angeordneten Schieberteile zu einem einheitlichen, starren, als Einheit antreibbaren, aufrechten Rahmen (25) verbunden und so gemeinsam bewegbar sind.

2. Speicherregal nach Anspruch 1, dadurch gekennzeichnet, daß die Querträger (10) zur Bildung des Rahmens (25) über Seitenleisten (24) miteinander verbunden sind.

3. Speicherregal nach Anspruch 1 oder 2, dadurch gekennzeichnet, daß der Rahmen (25) mit den Querträgern (10a) durch einen Arbeitszylinder (48) antreibbar ist.

4. Speicherregal nach Anspruch 2, dadurch gekennzeichnet, daß der Rahmen (25) mit Kettentrieben (27) verbunden ist, deren Kettenräder (29, 30) über Wellen (31, 32) in einem Gestellrahmen (8) des Speicherregales gelagert sind, wobei die Wellen (31, 32) synchron antreibbar sind.

5. Speicherregal nach Anspruch 4, dadurch gekennzeichnet, daß der Rahmen (25) im Bereich des obersten und untersten Querträgers (10) mit den Kettentrieben (27) verbunden ist.

6. Speicherregal nach Anspruch 1 oder 2, dadurch gekennzeichnet, daß die Querträger (10) an den Enden von Armen (38a, 38b, 38c) befestigt sind, die vom Rahmen (25) in dessen Bewegungsrichtung abstehen.

7. Speicherregal nach Anspruch 6, dadurch gekennzeichnet, daß zumindest einige der Arme (38a, 38c) über Rollen (42) in seitlichen Führungsschienen (43) gelagert sind, welche in einem Gestellrahmen (8) des Speicherregales befestigt sind.

8. Speicherregal nach Anspruch 6, dadurch gekennzeichnet, daß an zumindest zwei Armen (38b) Zahnleisten (39) vorgesehen sind, die mit Zahnrädern (40) kämmen, die auf einer gemeinsamen Welle (41) befestigt sind, die im Gestellrahmen (8) gelagert und mit einer Antriebseinrichtung (33) verbunden ist.

9. Speicherregal nach Anspruch 2, dadurch gekennzeichnet, daß die Mitnehmer (13) über Arme (44) mit den Querträgern (10a) verbunden sind, und am Rahmen (25) zusätzliche Arme (44') angebracht sind, die an ihren Enden Rollen (50) tragen, welche in Führungsschienen (51) an einem Gestellrahmen (8) des Speicherregales gelagert sind.

10. Speicherregal nach Anspruch 9, dadurch gekennzeichnet, daß der Rahmen (25), z.B. in ungefähr mittlerer Höhe, mit am Gestellrahmen (8) befestigten Arbeitszylindern (48) verbunden ist.

11. Speicherregal nach Anspruch 1 oder 2, dadurch gekennzeichnet, daß die Querträger (10) des Rahmens (25) Wagen (52) mit Rädern (53) definieren, die in seitlichen Führungen (54) laufen.

12. Speicherregal nach Anspruch 11, dadurch gekennzeichnet, daß zumindest der oberste und unterste Wagen (52), die je einer Reihe von nebeneinander liegenden Speicherfächern (5) zugeordnet sind, über eine Kurbelstange (56) mit einer Kurbelscheibe (57) gekuppelt ist, deren Welle (58) in einem Gestellrahmen (8) des Speicherregales gelagert ist.

13. Speicherregal nach Anspruch 12, dadurch gekennzeichnet, daß die Kurbelscheiben (57) der Wagen (52) untereinander durch Zahnriemen (59) gekoppelt und über eine Antriebseinrichtung (33) angetrieben sind.

14. Speicherregal nach einem der Ansprüche 11 bis 13, dadurch gekennzeichnet, daß die Führungen (54) und die Speicherfächer (5) in Ausschubrichtung schräg nach unten geneigt angeordnet sind.

15. Speicherregal nach einem der Ansprüche 1 bis 12, dadurch gekennzeichnet, daß an zumindest einem Querträger (10) im Bereich zumindest eines Mitnehmers (13) ein den Ausschiebevorgang am zugeordneten Speicherfach (5) überwachender Sensor (23') angeordnet ist.

16. Speicherregal nach Anspruch 15, dadurch gekennzeichnet, daß der Sensor (23') auch eingerichtet ist, um festzustellen, ob das Speicherfach (5) Stückgüter (11) enthält oder leer ist.

17. Speicherregal nach Anspruch 15 oder 16, dadurch gekennzeichnet, daß der Sensor (23') ein optischer Fühler ist.

18. Speicherregal nach einem der Ansprüche 1 bis 17, dadurch gekennzeichnet, daß die Mitnehmer (13) durch ausschiebbare Magnetkerne von an den Querträgern (10) angeordneten Elektromagneten (12) gebildet bzw. angetrieben sind.

19. Anordnung mit mehreren Speicherregalen nach Anspruch 12 oder 13, dadurch gekennzeichnet, daß beiderseits eines Förderbandes (4) einander gegenüberliegend Speicherregale (1, 1'; 2, 2') vorgesehen sind, und die Wagen (52) von einander gegenüberliegenden Speicherregalen über deren zugeordnete Kurbelstangen (56) durch eine gemeinsame, zwischen den Speicherregalen angeordnete Kurbelscheibe (57) angetrieben sind.

## Claims

1. A storage shelf (1, 2, 3) for items comprising adjacently arranged and superposed storage compartments (5) and a controllable dispensing device for shifting the items out of the storage compartments (5), the dispensing device including slider parts associated to the rows of adjacently arranged storage compartments (5) and movable in parallel to the compartment bottoms thereof, the slider parts cooperating with separately activatable drivers (13) associated to the individual storage compartments (5) of the respective row so as to shift the items out of the respective storage compartments (5) in the activated state of the drivers (13), when the slider parts are moved forwards, the drivers (13), in their activated state, projecting upwardly from their slider parts movable below the bottoms (7) of the storage compartments (5), through slots (14) in the bottoms (7), while being present below the bottoms (7) in their non-activated state, characterized in that the superposed slider parts formed by beam-like cross members (10) are interconnected to a uniform, rigid, upright frame (25) drivable as a unit and, thus, are movable in common.

2. A storage shelf according to claim 1, characterized in that the cross members (10) are interconnected via lateral bars (24) to form the frame (25).

3. A storage shelf according to claim 1 or 2, characterized in that the frame (25) with the cross members (10a) is drivable by a working cylinder (48).

4. A storage shelf according to claim 2, characterized in that the frame (25) is connected with chain drives (27) the chain wheels (29, 30) of which are mounted in a framework (8) of the storage shelf via shafts (31, 32), the shafts (31, 32) being synchronously drivable.

5. A storage shelf according to claim 4, characterized in that the frame (25) is connected with the chain drives (27) in the region of the uppermost and lowermost cross members (10).

6. A storage shelf according to claim 1 or 2, characterized in that the cross members (10) are fastened to the ends of arms (38a, 38b, 38c) projecting from the frame (25) in the movement direction thereof.

7. A storage shelf according to claim 6, characterized in that at least some of the arms (38a, 38c), via rollers (42), are mounted in lateral guide rails (43) which are fastened in a framework (8) of the storage shelf.

8. A storage shelf according to claim 6, characterized in that toothed ledges (39) are provided on at least two arms (38b) and mesh with toothed wheels (40) which are fastened on a common shaft (41) which is mounted in the framework (8) and connected with a driving device (33).

9. A storage shelf according to claim 2, characterized in that the drivers (13) are connected with the cross members (10a) via arms (44), and additional arms (44') are attached to the frame (25) which carry rollers (50) at their ends, the rollers being mounted in guide rails (51) on a framework (8) of the storage shelf.

10. A storage shelf according to claim 9, characterized in that the frame (25), e.g. at approximately the middle of its height, is connected with working cylinders (48) fastened to the framework (8).

11. A storage shelf according to claim 1 or 2, characterized in that the cross members (10) of the frame (25) define carriages (52) with wheels (53) running in lateral guides (54).

12. A storage shelf according to claim 11, characterized in that at least the uppermost and the lowermost carriage (52) which are associated to one row each of adjacent storage compartments (5) are coupled with a crank disk (57) via a connecting rod (56), the shaft (58) of the crank disk being mounted in a framework (8) of the storage shelf.

13. A storage shelf according to claim 12, characterized in that the crank disks (57) of the carriages (52) are coupled among each other by toothed belts (59) and driven via one driving device (33).

14. A storage shelf according to any one of claims 11 to 13, characterized in that the guides (54) and the storage compartments (5) are arranged to be slantedly downwardly inclined in the shift-out direction.

15. A storage shelf according to any one of claims 1 to 12, characterized in that on at least one cross member (10) in the region of at least one driver (13), a sensor (23') monitoring the shift-out operation at the associated storage compartment (5) is arranged.

16. A storage shelf according to claim 15, characterized in that the sensor (23') is also adapted to sense whether the storage compartment (5) contains items (11) or is empty.

17. A storage shelf according to claim 15 or 16, characterized in that the sensor (23') is an optical sensor.

18. A storage shelf according to any one of claims 1 to 17, characterized in that the drivers (13) are formed or driven, respectively, by extendable magnetic cores of solenoids (12) arranged on the cross members (10).

19. An arrangement comprising a plurality of storage shelves according to claim 12 or 13, characterized in that on either side of a conveying belt (4), opposite storage shelves (1, 1'; 2, 2') are provided and the carriages (52) of opposite storage shelves are driven via associated connecting rods (56) by a common crank disk (57) arranged between the storage shelves.

## Revendications

1. Rayonnage de stockage (1, 2, 3) pour articles au détail, comprenant des casiers de stockage (5) agencés les uns à côté et au-dessus des autres, et un dispositif de distribution commandé pour extraire des articles des casiers de stockage (5), le dispositif de distribution présentant des pièces coulissantes affectées aux rangées de casiers de stockage (5) agencés les uns à côté des autres et déplaçables parallèlement à leur fond, lesdites pièces coopérant avec des entraîneurs (13) séparément activables affectés aux casiers de stockage individuels (5) de la rangée correspondante pour extraire les articles des casiers de stockage respectifs (5) à l'état activé des entraîneurs (13) lors du déplacement en avant des pièces coulissantes, les entraîneurs (13), à l'état activé de leurs pièces coulissantes déplaçables en dessous des fonds (7) des casiers de stockage (5), dépassant vers le haut à travers des fentes (14) dans les fonds (7), mais se trouvant, à l'état non activé, en dessous des fonds (7), caractérisé en ce que les pièces coulissantes formées par des traverses de support (10) en forme de poutre agencées l'une au-dessus de l'autre sont reliées pour former un châssis droit unitaire rigide (25) entraînable en une seule unité et peuvent être ainsi déplacées conjointement.

2. Rayonnage de stockage selon la revendication 1, caractérisé en ce que les traverses de support (10) sont reliées les unes aux autres pour former le châssis (25) par l'entremise d'éclisses latérales (24).

3. Rayonnage de stockage selon la revendication 1 ou 2, caractérisé en ce que le châssis (25) peut être entraîné avec les traverses de support (10a) par un cylindre de travail (48).

4. Rayonnage de stockage selon la revendication 2, caractérisé en ce que le châssis (25) est relié à des commandes à chaîne (27) dont les roues à chaîne (29, 30) sont montées via des arbres (31, 32) dans un cadre (8) du rayonnage de stockage, les arbres (31, 32) pouvant être entraînés en synchronisme.

5. Rayonnage de stockage selon la revendication 4, caractérisé en ce que le châssis (25) est relié aux commandes à chaîne (27) dans la zone des traverses de support (10) supérieure et inférieure.

6. Rayonnage de stockage selon la revendication 1 ou 2, caractérisé en ce que les traverses de support (10) sont fixées aux extrémités de bras (38a, 38b, 38c) qui s'écartent du châssis (25) dans leur direction de déplacement.

7. Rayonnage de stockage selon la revendication 6, caractérisé en ce qu'au moins certains des bras (38a, 38c) sont montés, sur des rouleaux (42), dans des coulisses latérales (43) qui sont fixées dans un cadre (8) du rayonnage de stockage.

8. Rayonnage de stockage selon la revendication 6, caractérisé en ce qu'il est prévu sur au moins deux bras (38b) des éclisses dentées (39) qui s'engrènent sur des roues dentées (40) qui sont fixées à un arbre commun (41) qui est monté dans le cadre (8) et est relié à un dispositif d'entraînement (33).

9. Rayonnage de stockage selon la revendication 2, caractérisé en ce que les entraîneurs (13) sont reliés aux traverses de support (10a) via des bras (44) et en ce qu'on monte sur le châssis (25) des bras supplémentaires (44') qui portent à leurs extrémités des rouleaux (50) qui sont montés dans des coulisses (51) sur un cadre (8) du rayonnage de stockage.

10. Rayonnage de stockage selon la revendication 9, caractérisé en ce que le châssis (25) est relié, par exemple à peu près à hauteur du centre, à des cylindres de travail (48) fixés sur le cadre (8).

11. Rayonnage de stockage selon la revendication 1 ou 2, caractérisé en ce que les traverses de support (10) du châssis (25) définissent des chariots (52) avec des roues (53) qui roulent dans des coulisses latérales (54).

12. Rayonnage de stockage selon la revendication 11, caractérisé en ce qu'au moins les chariots (52) supérieur et inférieur, qui sont respectivement affectés à une série de casiers de stockage (5) agencés les uns à côté des autres, sont couplés via une bielle motrice (56) à un bras de manivelle (57) dont l'arbre (58) est monté dans un cadre (8) du rayonnage de stockage.

13. Rayonnage de stockage selon la revendication 12, caractérisé en ce que les bras de manivelle (57) des chariots (52) sont couplés mutuellement par des courroies crantées (59) et sont entraînés via un dispositif d'entraînement (33).

14. Rayonnage de stockage selon l'une quelconque des revendications 11 à 13, caractérisé en ce que les coulisses (54) et les casiers de stockage (5) sont agencés en oblique vers le bas dans la direction d'expulsion.

15. Rayonnage de stockage selon l'une quelconque des revendications 1 à 12, caractérisé en ce qu'au moins sur une traverse de support (10), on agence, dans la zone d'au moins un entraîneur (13), un capteur (23') contrôlant l'opération d'expulsion sur le casier de stockage correspondant (5).

16. Rayonnage de stockage selon la revendication 15, caractérisé en ce que le capteur (23') est également orienté pour établir si le casier de stockage (5) contient des articles (44) ou est vide.

17. Rayonnage de stockage selon la revendication 15 ou 16, caractérisé en ce que le capteur (23') est un capteur optique.

18. Rayonnage de stockage selon l'une quelconque des revendications 1 à 17, caractérisé en ce que les entraîneurs (13) sont formés ou entraînés par des noyaux magnétiques expulsables d'électro-aimants (12) agencés sur les traverses de support (10).

19. Agencement de plusieurs rayonnages de stockage selon la revendication 12 ou 13, caractérisé en ce qu'il est prévu des rayonnages de stockage (1, 1'; 2, 2') agencés les uns en regard des autres des deux côtés d'une bande transporteuse (4), et les chariots (52) de rayonnages de stockage en regard l'un de l'autre sont entraînés, via leurs bielles motrices correspondantes (56), par un bras de manivelle commun (57) agencé entre les rayonnages de stockage.
